Europäisches Patentamt
(19) European Patent Office
Office européen des brevets

(11) Numéro de publication : **0 314 544 B1**

(12)                    **FASCICULE DE BREVET EUROPEEN**

(45) Date de publication du fascicule du brevet :
25.09.91 Bulletin 91/39

(51) Int. Cl.⁵ : **B23B 31/08**

(21) Numéro de dépôt : 88402625.3

(22) Date de dépôt : 18.10.88

(54) **Mandrin de serrage, notamment pour des machines à avance automatique.**

(30) Priorité : 30.10.87 FR 8715109

(43) Date de publication de la demande :
03.05.89 Bulletin 89/18

(45) Mention de la délivrance du brevet :
25.09.91 Bulletin 91/39

(84) Etats contractants désignés :
AT DE IT

(56) Documents cités :
CH-A- 256 607
FR-A- 2 319 806
GB-A- 830 332
GB-A- 1 524 868
US-A- 3 002 206

(73) Titulaire : Prachar, Cyril
"Le Titien" Quai du Nouveau Port de
Fontvieille
MC-98000 Monaco (MC)

(72) Inventeur : Prachar, Cyril
"Le Titien" Quai du Nouveau Port de
Fontvieille
MC-98000 Monaco (MC)

(74) Mandataire : Berger, Helmut et al
Cabinet Z. WEINSTEIN 20, avenue de
Friedland
F-75008 Paris (FR)

EP 0 314 544 B1

## Description

L'invention a pour objet un mandrin de serrage d'un outil notamment pour machines à avance automatique, du type comprenant un organe porte-outil avantageusement en forme d'un manchon tubulaire, un manchon à plateau pouvant être solidarisé de l'organe porte-outil, un dispositif susceptible d'être entraîné en rotation par la machine et d'entraîner en rotation ledit manchon à plateau par l'intermédiaire d'éléments d'accouplement tels que des corps de révolution avantageusement en forme de billes, s'engageant partiellement dans des évidements pratiqués dans la surface du plateau, situé en regard dudit dispositif, et dont les parois sont inclinées par rapport à ladite surface de plateaux, sous la force de poussée axiale d'éléments de rappel, tel que de ressorts, logés dans ledit dispositif.

Un mandrin de serrage de ce type est déjà connu par exemple du document CH-A-256607. L'accouplement du dispositif entraîné par la machine et du manchon à plateau, à l'aide de billes, sous l'effet d'une force de rappel permet un désaccouplement des parties menante et menée en cas d'une force s'opposant à la rotation de l'outil, par exemple d'un foret, qui dépasse un seuil prédéterminé.

Par contre, bien qu'il équipe des machines à avance automatique, ce mandrin de serrage connu ne comporte pas de moyen permettant d'éliminer le risque de rupture de l'outil en cas d'un effort de pénétration excessive dans la pièce à usiner. Ceci entraîne de graves inconvénients. On constate notamment que le morceau cassé de l'outil reste dans la pièce en cours de travail d'usinage, de sorte que cette pièce est perdue. Il s'est avéré en outre que le mandrin de serrage connu nécessite plusieurs clés pour démonter et remonter un foret ou taraud et ce dernier est difficile à sortir de son logement.

La présente invention a pour objectif de proposer un mandrin de serrage qui ne présente plus les inconvénients qui viennent d'être énoncés.

Pour atteindre ce but, le mandrin de serrage selon l'invention est caractérisé en ce que le dispositif d'entraînement comporte deux parties qui sont montées solidaires en rotation et sont mobiles l'une par rapport à l'autre lorsque la force axiale entre l'outil et l'organe d'entraînement de la machine dépasse une valeur de seuil prédéterminée.

Selon une caractéristique avantageuse de l'invention, le dispositif d'entraînement du manchon à plateau comprend une partie d'accouplement en rotation au manchon à plateau et un organe entraîné par la machine, avantageusement en forme d'un axe, qui est monté axialement mobile dans la partie d'accouplement, à l'aide de corps de révolution telles que des billes, à l'encontre de moyens de rappel, ces corps de révolution étant logés dans des rainures axiales en regard pratiquées dans ladite partie d'accouplement et ledit organe en forme d'axe.

Selon encore une autre caractéristique avantageuse de l'invention, l'organe porte-outil est réalisé sous forme d'un manchon tubulaire, partiellement fendu dans sa direction axiale, avantageusement en croix, pour assurer un serrage élastique de la queue de l'outil et présentant deux portions radialement externes tronconiques, axialement décalées et de conicité convergente, une portion s'engageant dans un alésage tronconique coaxial du manchon à plateau et l'autre coopérant avec une partie tronconique prévue dans un organe tubulaire coaxial, formant écrou susceptible d'être vissé sur une partie filetée coaxiale dudit manchon à plateau, de façon qu'un mouvement axial de serrage dudit écrou entraîne le serrage de l'outil dans l'organe porte-outil au niveau des deux parties tronconiques de celui-ci.

Selon encore une autre caractéristique avantageuse, le mandrin de serrage selon l'invention comporte une bague montée rotative concentriquement sur le pourtour de la partie d'accouplement précitée et des moyens commandés par la rotation de cette bague, qui sont susceptibles de rendre solidaire en rotation ladite partie d'accouplement et ledit manchon à plateau, de façon à permettre le montage ou démontage d'un outil dans l'organe porte-outil, par actionnement manuel de ladite bague et de l'écrou de serrage précité.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lequel :

La figure 1 est une vue en coupe axiale d'un mandrin de serrage selon l'invention, au niveau de la ligne I-I de la figure 2 ;

La figure 2 est une vue en direction de la flèche II de la partie d'accouplement du mandrin, selon la figure 1, qui est représenté aux figures 4 à 6 ;

La figure 3 est une vue en coupe axiale, avec arrachement, du mandrin selon l'invention, au niveau de la ligne III-III de la figure 2 ;

La figure 4 est une vue en coupe axiale de la partie d'accouplement de la figure 2 selon la ligne IV-IV de cette figure ;

La figure 5 est une vue en coupe axiale selon la ligne V-V de la figure 2.

La figure 6 est une vue en coupe axiale selon la ligne VI-VI de la partie d'accouplement représentée à la figure 2 ; et

La figure 7 est une vue en coupe de la bague indiquée par la flèche VII à la figure 1.

L'invention sera décrite en se reportant aux figures qui représentent à titre d'exemple un mandrin de serrage, d'un foret ou taraud (non représentés) adaptés pour équiper une perceuse à avance automatique.

Le mandrin de serrage selon l'invention comprend essentiellement un dispositif 1 comportant un organe 2 en forme d'un axe, destiné à être entraîné en rotation par un moteur de la perceuse (non représenté) et une partie 3 solidaire en rotation de l'axe 2 et adaptée pour entraîner en rotation un manchon à plateau 4 qui peut être rendu solidaire en rotation d'un organe porte-outil 5, à l'aide d'un écrou chapeau de serrage 6.

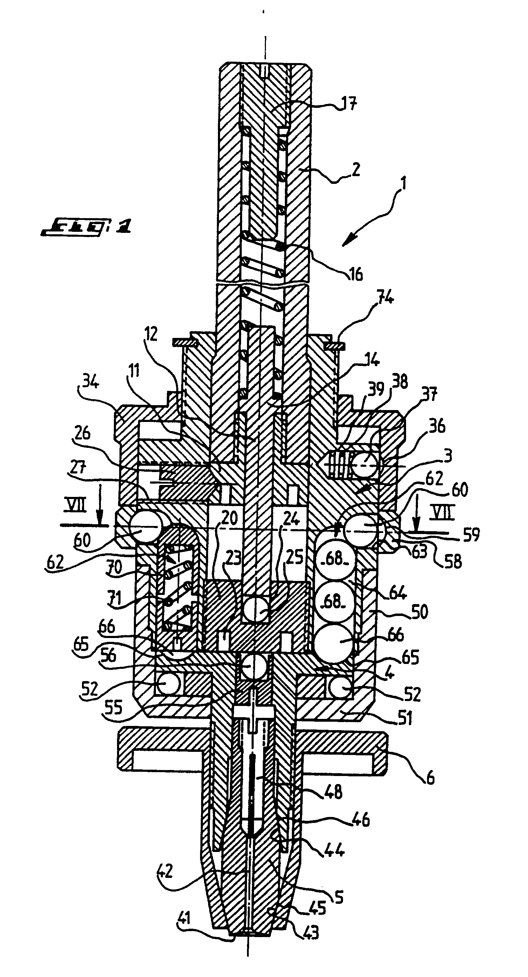

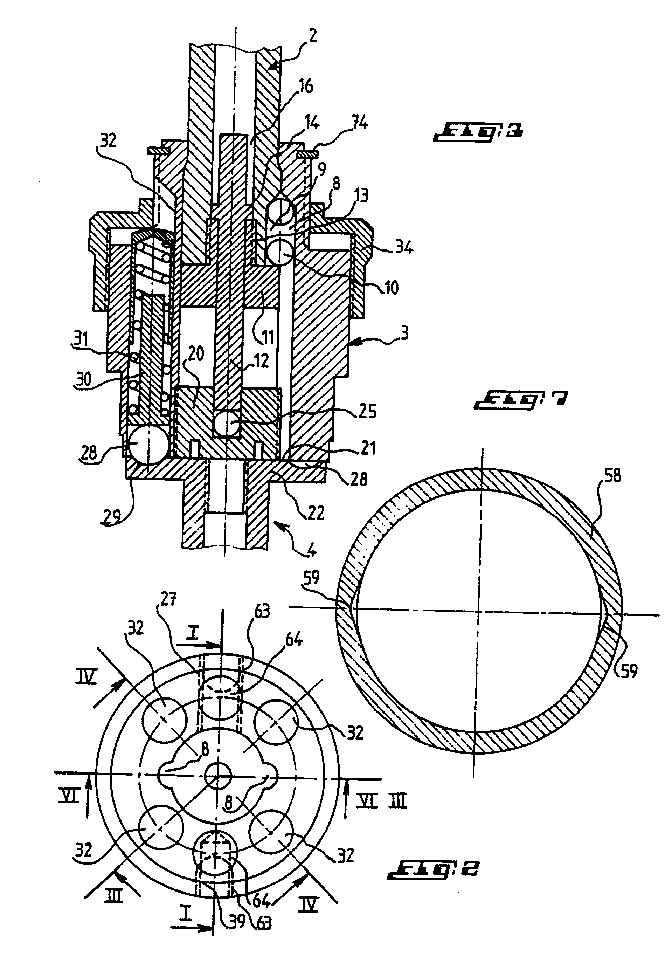

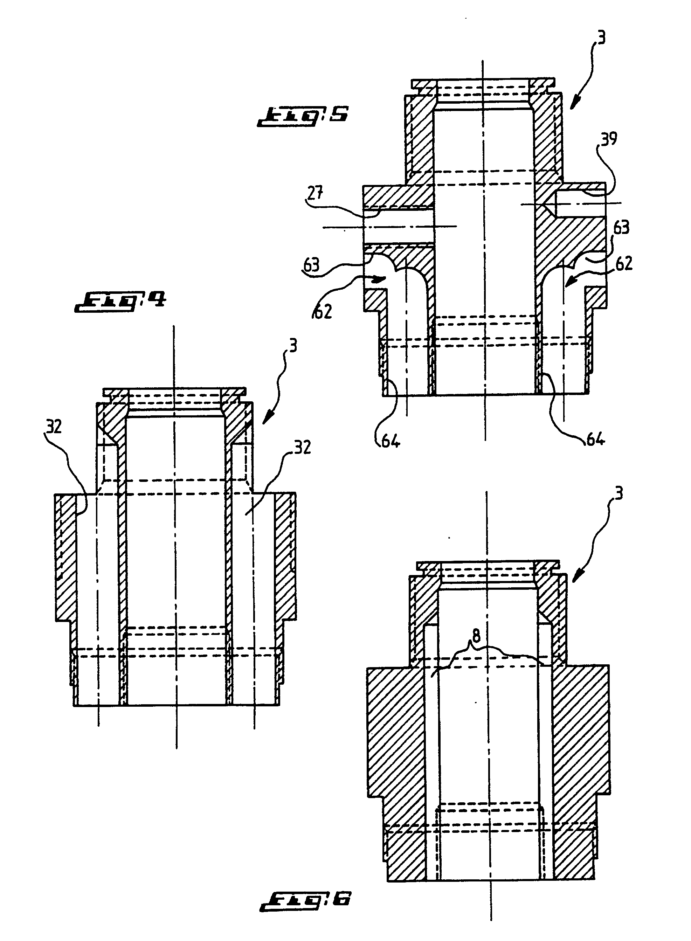

La partie d'accouplement 3 est réalisée sous forme d'un corps tubulaire dans la face cylindrique interne duquel sont usinées deux rainures axiales 8, qui sont situées diamétralement opposées (figures 2 et 3). La partie inférieure de l'axe 2, qui s'engage concentriquement dans la partie supérieure du corps tubulaire 3 présente également deux rainures axiales 9 dont chacune est située en regard d'une rainure 8 du corps 3 (figure 3). Chaque paire de deux rainures en regard 8 et 9 délimite un espace de section transversale sensiblement circulaire dans lequel sont disposées des billes 10 qui accomplissent deux fonctions. Elles rendent solidaire en rotation le corps d'entraînement 3 en rotation du manchon à plateau 4, de l'axe 2 entraîné par le moteur de la machine, et facilite le déplacement relatif axial de l'axe 2 et du corps 3. L'espace de logement des billes est avantageusement réalisé par alésage d'en bas sur la figure 3, après l'emmanchement de l'axe 2 dans le corps tubulaire 3. Après l'insertion des billes 10 dans leur logement formé par les deux rainures 8 et 9 en regard, l'espace de logement est fermé en bas par la collerette radialement saillante 11 d'un embout fileté 13 vissé dans l'extrémité inférieure de l'axe 2. Cet élément 12 est traversé coaxialement par un petit axe 12. Celui-ci est monté axialement mobile dans l'élément 11 et est guidé dans l'espace interne de l'axe creux 2 à l'aide d'une collerette circulaire 14. La face frontale annulaire en regard de l'embout 11 forme la butée de limitation de la course de l'axe 12, tandis que la surface frontale annulaire supérieure de la collerette 14 sert de surface d'appui à un ressort 16 qui est logé dans l'espace interne de l'axe 2 et prend appui à son autre extrémité sur un écrou 17 vissé dans l'extrémité supérieure de l'axe 2. La position axiale de cet écrou est réglable pour permettre un réglage de la force de précontrainte du ressort 16. Un bouchon cylindrique 20 est vissé dans l'extrémité du corps tubulaire 3, qui est situé en regard du manchon à plateau 4. Le bouchon 20 est fileté dans l'extrémité du corps 3 de façon que la face frontale en regard de la surface supérieure 21 du plateau 22 du manchon 4 soit plane. Des empreintes 23 sont prévues pour la rotation du bouchon 20 à l'aide d'un outil approprié. Ce dernier présente un alésage borgne 24 qui s'ouvre vers le haut de façon à pouvoir recevoir l'extrémité inférieure de l'axe 12. Cette extrémité prend appui sur le fond de l'alésage 24 par l'intermédiaire d'une bille 25.

L'axe 2 et le corps tubulaire 3 peuvent être rendus axialement solidaires à l'aide d'une vis 26 traversant le corps 3 dans un alésage 27 fileté, perpendiculairement à son axe jusqu'à une position dans laquelle sa pointe pénètre dans la collerette 11 située au bout de l'axe 2.

Comme il ressort des figures 1 et 3, le manchon à plateau 4, qui porte l'organe porte-outil peut être solidarisé en rotation du corps creux 3 à l'aide de billes 28 qui sont logées dans le corps 3 et s'engagent partiellement dans des évidements ou empreintes 29 pratiqués dans la face 21 du plateau 22 du manchon 4. Chaque bille 28 est poussée dans son empreinte 29 par un dispositif poussoir 30 à ressort 31 qui est logé dans un canal axial 32 pratiqué dans le corps creux 3, comme cela ressort notamment des figures 3 et 4. Le ressort 31 prend par appui par son extrémité opposée à la bille 29 sur une surface d'appui annulaire perpendiculaire à l'axe du corps 2 et du mandrin, d'un écrou chapeau 34 qui est vissé sur la surface cylindrique externe au niveau de l'extrémité supérieure du corps 3. La force de précontrainte des ressorts 31 peut ainsi être réglée par rotation de l'écrou chapeau 34. Ce dernier comporte dans sa surface cylindrique interne, dans un plan perpendiculaire à l'axe du mandrin, un certain nombre d'empreintes 36 avantageusement réparties angulairement équidistantes et destinées à recevoir chacune, partiellement, une bille 37 sous la force d'un ressort de rappel 38. Chaque ressort et sa bille associés sont logés dans un trou 39 percé dans le pourtour du corps 3, perpendiculairement à son axe.

Comme on le voit clairement sur la figure 1, l'organe porte-outil 5 est réalisé sous forme d'un manchon tubulaire fendu axialement en croix sur la plus grande partie de sa longueur. Les fentes qui s'étendent de l'extrémité inférieure 41 d'introduction de l'outil jusqu'à un endroit relativement proche de l'extrémité opposée sont désignées par la référence 42. Le manchon 5 présente deux portions extérieures tronconiques 43, 44 axialement décalées et de conicité convergente. La portion tronconique 43 est prévue au niveau de l'extrémité inférieure du manchon porte-outil et coopère avec une partie de surface intérieure conique de l'écrou chapeau de serrage 6 qui est vissé sur la surface cylindrique externe du manchon à plateau 4 dont l'extrémité opposée au plateau 22 est conique de façon complémentaire à la portion tronconique 44 du manchon porte-outil 5. On comprend aisément qu'en faisant tourner l'écrou chapeau 6 de façon à ce qu'il se déplace axialement vers le haut sur la figure 1, l'organe porte-outil 5, grâce à sa forme biconique et les fentes axiales 42, assure un serrage de l'outil sur toute la longueur de l'organe 5. On constate qu'une goupille 48 est vissée dans l'organe porte-outil 5 à partir de l'extrémité opposée à l'extrémité 41 d'insertion de l'outil. L'extrémité interne de la goupille 8 sert de surface d'appui pour l'outil. La position axiale de cette extrémité est réglable à l'intérieur de l'organe 5.

En se reportant à la figure 1, on constate encore que le corps tubulaire 3 et le manchon à plateau 4 sont maintenus axialement alignés par un écrou chapeau 50.

Cet écrou est vissé sur une partie filetée de la surface extérieure cylindrique du corps 3 et porte à son autre extrémité une partie 51 faisant radialement saillie vers l'axe du mandrin. La surface interne annulaire perpendiculaire à l'axe assure le maintien en position alignée du corps 3 et du manchon à plateau 4 par l'intermédiaire de billes 52. On constate encore qu'un bouchon fileté 55 est vissé dans le manchon 4 au niveau de son plateau 22. Cette vis permet de régler le jeu qui pousse une bille 56 contre la surface frontale externe du bouchon 20.

Le mandrin de serrage selon l'invention comporte en outre des moyens permettant de serrer et de déserrer les outils manuellement, sans obligation d'utiliser des clés. A cette fin une bague 58 est montée concentrique et rotative sur le corps creux 3 et comporte dans sa face radialement interne deux encoches 59 diamétralement en regard, comme le montre la figure 7. Chaque encoche est conformée pour pouvoir recevoir partiellement une bille 60. Ces encoches présentent une forme particulière. Dans la coupe axiale de la figure 1, le rayon des encoches 59 correspond au rayon des billes 60. Par contre dans la direction périphérique de la bague, les encoches présentent un profil sensiblement triangulaire, le fond présentant la même courbure que les billes, tandis qu'au niveau de la surface cylindrique interne, les encoches sont plus larges que les billes. De ce fait, les flancs sensiblement rectilignes des encoches 59 ont pour effet de repousser les billes 60 radialement dans un canal 62 pratiqué dans le corps creux 3. Ce canal 62 présente au niveau de la bague 58 une partie sensiblement radiale 63 dont la section transversale correspond aux dimensions des billes 60 et qui communiquent avec une partie de canal axial 64. En regard de chacune de ces parties de canal axial 64, un évidement ou empreinte 65 est pratiqué dans la face 21 du plateau 22 du manchon 4. Ces empreintes qui sont situées diamétralement opposées dans la surface 21 et excentrées sont conformées chacune pour recevoir partiellement une bille 66 engagée dans la partie de canal axiale 64. Celui-ci présente une section transversale circulaire dont le diamètre est légèrement supérieur au diamètre des billes 66. Dans la partie de canal axiale 64, située au côté droit de la figure 1, deux billes 68 sont interposées entre les billes 60 et 66 de façon que le déplacement radial de la bille 60 correspondante radialement vers l'intérieur dans sa partie de canal radial 63, sous l'effet de la rotation de la bague 58, dans l'un ou l'autre sens, la bille 66 soit repoussée dans son empreinte 65. Ceci a pour effet de solidariser en rotation le corps creux 3 et le manchon à plateau 4. Dans l'autre partie de canal axiale 64, représentée au côté gauche de la figure 1, un agencement 70 élastiquement compressible à l'encontre d'un ressort de rappel 71 est interposé entre les billes 60 et 66. L'agencement 70 tend à repousser la bille 60 radialement vers l'extérieur dans la partie de canal radiale 63.

Pour compléter la description du manchon de serrage, on constate qu'un circlips 74 est prévu à l'extrémité supérieure du corps tubulaire 3, qui a pour fonction de limiter la course de l'écrou chapeau 34.

On expliquera ci-après le fonctionnement du mandrin de serrage selon l'invention, qui vient d'être décrit.

Pour enserrer un outil à savoir un foret, dans l'organe porte-outil 5, on emmanche la queue du foret dans cette pièce jusqu'à venir en butée contre la tige interne 48. On fait tourner alors la bague 58 dans le sens approprié. La bague repousse les billes 60 radialement vers l'intérieur de leurs parties de canal radial 63 par la paroi interne latérale inclinée correspondante des encoches 59. La bille 60 au côté droit de la figure 1 repousse alors la bille 66 dans son empreinte 65 par l'intermédiaire des deux billes 68, ce qui solidarise en rotation le corps creux et le mandrin à plateau 4. La bille 60 située au côté gauche de la figure repousse la bille correspondante 66 dans son empreinte, en comprimant l'agencement de rappel élastique 70.

Ensuite on fait tourner l'écrou chapeau de serrage 6 par sa partie de couronne annulaire dans le sens de déplacement ascendant, ce qui provoque le serrage de la queue de foret dans l'organe porte-outil 5 formant pince de serrage, sur toute la longueur de la queue de l'outil, grâce aux deux parties tronconiques 43, 44 de l'organe 5 et des parties coniques complémentaires correspondantes 45, 46 prévues aux extrémités de l'écrou 6 et du manchon à plateau 4. Ce serrage se fait uniquement en tenant entre les mains l'écrou chapeau 6 et la bague 58. Lorsque le serrage de l'outil dans le mandrin est effectué, on relache la bague 58 qui sera ramenée dans sa position neutre par l'agencement de rappel 70. En effet celui-ci en repoussant la bille 60 contre une des parois inclinées de l'encoche 59 provoque la rotation de la bague 58 jusqu'à ce que la bille repose dans le fond de l'encoche. Dans cette position la bille 66 au côté droit de la figure possède à l'intérieur de la partie de canal axiale 64 une distance de course suffisante pour désolidariser le corps tubulaire 3 du manchon à plateau 4, dans la mesure où la bille 60 est déplaçable radialement vers l'extérieur dans l'encoche 59 de la bague 58. Dans ces conditions, le moyen de solidarisation en rotation du manchon à plateau 4, du corps creux est hors service.

L'axe 2 est emmanché dans la machine et entraîné en rotation par celle-ci. Il entraîne en rotation à son tour le corps tubulaire 3 au moyen des billes 10 logées dans les deux paires de rainures axiales 8, 9 pratiquées dans l'axe 2 et le corps 3.

En cas de surcharge axiale de l'outil par l'avance automatique impartie par la machine, le corps tubulaire 3 est repoussé vers le haut par le foret et se déplace par coulissement roulant grâce aux billes 10 sur l'axe 2 en comprimant le ressort 16 réglable à volonté par le bouchon fileté 17, en annulant ainsi l'avance donnée par la machine. En outre, le foret ne tournera plus car les billes 28 et également les billes 66 échapperont à leurs empreintes respectives en provoquant la compression de leurs ressorts de rappel 31 et 71 respectivement, ce qui a pour effet que le corps tubulaire 3 tourne sur le plateau du mandrin 4 sans entraîner celles-ci. Le seuil de désolidarisation en rotation du corps 3 et du manchon à plateau 4, c'est-à-dire la précontrainte des ressorts 31, est réglable au moyen de l'écrou chapeau 34 que l'on visse ou que l'on dévisse à la main sur le corps 3. Ce chapeau est bloqué dans chaque position annulaire donnée au moyen des ressorts 36 pénétrant dans un écran ou une encoche 36 interne de l'écrou.

## Revendications

1. Mandrin de serrage d'un outil, notamment pour machines à avance automatique, du type comprenant un organe porte-outil (5) avantageusement en forme d'un manchon tubulaire, un manchon à plateau (4) pouvant être solidarisé de l'organe porte-outil (5), un dispositif (1) susceptible d'être entraîné en rotation par la machine et d'entraîner en rotation ledit manchon à plateau (4), par l'intermédiaire d'éléments d'accouplement tels que des corps de révolution avantageusement en forme de billes (28), s'engageant partiellement dans des évidements (29) pratiqués dans la surface (21) du plateau (22) du manchon (5), situé en regard dudit dispositif (1), sous la force de poussée axiale d'éléments de rappel (31), tels que des ressorts, logés dans ledit dispositif (1), caractérisé en ce que le dispositif d'entraînement (1) comporte deux parties (2, 3) coaxiales qui sont montées solidaires en rotation et sont axialement mobiles l'une par rapport à l'autre lorsque la force axiale entre l'outil et l'organe d'entraînement de la machine dépasse une valeur de seuil prédéterminée.

2. Mandrin selon la revendication 1, caractérisé en ce que le dispositif d'entraînement (1) du manchon à plateau (4) comprend une partie (3) d'accouplement en rotation au manchon à plateau (4) et un organe (2) entraîné par la machine avantageusement en forme d'un axe, qui est monté axialement mobile dans la partie d'accouplement, à l'encontre de moyens de rappel (16) tels qu'un ressort déterminant la valeur de seuil prédéterminée précitée.

3. Mandrin selon la revendication 2, caractérisé en ce que la partie (3) d'accouplement et l'organe (2) entraînés par la machine sont montés axialement mobiles à l'aide de corps de révolution tels que des billes (10), à l'encontre du moyen de rappel (16), ces corps de révolution (10) étant logés dans des rainures axiales en regard (8, 9) pratiquées dans la partie d'accouplement (3) et l'organe (2) et formant avantageusement également les moyens de solidarisation en rotation de la partie d'accouplement (3) et de l'organe (2).

4. Mandrin selon l'une des revendications 2 ou 3, caractérisé en ce que le corps tubulaire formant la partie d'accouplement et l'organe (2) en forme d'un axe sont susceptibles d'être rendus axialement solidaires à l'aide d'une vis d'arrêt (26) traversant ledit corps pour s'engager dans un évidement prévu dans ledit organe (2), dans une partie où les deux pièces (2, 3) sont concentriques.

5. Mandrin selon l'une des revendications 1 à 4, caractérisé en ce que l'organe porte-outil (5) est réalisé sous forme d'un manchon tubulaire, fendu en (42) dans sa direction axiale, avantageusement en croix, sur la plus grande partie de sa longueur, à partir de son extrémité (41) d'introduction de la queue de l'outil, et présentant deux parties radialement externes tronconiques (43, 44), axialement décalées et de conicité convergente, une partie (44) s'engageant dans un alésage tronconique coaxial (46) du manchon à plateau (4) et l'autre (43) coopérant avec une partie tronconique (45) prévue dans un organe tubulaire coaxial (6) formant écrou susceptible d'être vissé sur une partie filetée coaxiale dudit manchon à plateau (4), de façon qu'un mouvement axial de serrage dudit écrou (6) entraîne le serrage de la queue de l'outil dans l'organe porte-outil (5) au niveau des deux parties tronconiques (43, 44) de celui-ci.

6. Mandrin selon l'une des revendications précédentes, caractérisé en ce qu'il comporte une bague de réglage (34) de la force de rappel s'exerçant sur les billes (28) de solidarisation du dispositif d'entraînement (1) et du manchon à plateau (4), par rotation pas à pas, la bague étant verrouillable dans chaque position angulaire d'arrêt de ce mouvement pas à pas.

7. Mandrin selon la revendication 6, caractérisé en ce que les moyens de verrouillage de la bague (34) précitée sont formés par des corps de révolution tels que des billes (37) réparties angulairement et de façon équidistante à la périphérie du corps tubulaire (3), dans des logements (39) prévus dans celui-ci et s'engageant partiellement dans des évidements (36) pratiqués en regard des logements (39) dans la face radialement interne de ladite bague (34), sous la force de poussée d'organe de rappel (38) disposée dans le fond desdits logements (39).

8. Mandrin selon l'une des revendications précédentes, caractérisé en ce qu'il comporte une bague (58) montée rotative concentriquement sur le pourtour de la partie d'accouplement (3) précitée et des moyens (60, 66, 68) commandés par la rotation de cette bague (58), qui sont susceptibles de rendre solidaire en rotation ladite partie d'accouplement (3) et ledit manchon à plateau (4), de façon à permettre le montage et le démontage d'un outil dans l'organe porte-outil (5), par actionnement manuel de ladite bague (58) et de l'écrou de serrage (6) précité.

9. Mandrin selon la revendication 8, caractérisé en ce que les moyens de solidarisation en rotation précités sont disposés dans un canal (62, 63, 64) pratiqué dans le corps creux (3) et s'étendant entre une encoche (65) pratiquée dans la face (21) du plateau (22) du manchon (4), qui est en regard du corps creux (3), à un endroit excentré, et une encoche (59) pratiquée dans la face radialement interne de la bague (58), les moyens de solidarisation comportent, associées à un canal (62), des billes (60, 66) placées dans les extrémités dudit canal et susceptibles de s'engager respectivement dans les encoches (65 et 59), entre ces deux billes (60 et 66) étant interposées des moyens (68) de façon qu'un déplacement d'une bille (60) vers l'intérieur du canal (62) sous l'effet de la rotation de la bague (58) dans l'un ou l'autre sens entraîne l'engagement forcé de la bille (66) dans son encoche (65).

10. Mandrin selon l'une des revendications 8 ou 9, caractérisé en ce qu'il comprend des moyens de remise en position neutre de désolidarisation de la bague (58) précitée, sous l'effet de moyens élastiques, tel qu'un ressort (71).

11. Mandrin selon la revendication 10, caractérisé en ce qu'un deuxième canal (62) est pratiqué dans le corps creux (3), qui s'étend entre une seconde encoche (65) pratiquée dans la face (21) du plateau (22) du manchon (4) et une seconde encoche (59) pratiquée dans la face radialement interne de la bague (58), des billes (60, 66) sont logées dans les extrémités respectivement en face des encoches (65 et 59), entre lesquelles est déposé un moyen élastiquement compressible (70), tel qu'un moyen à ressort (71).

12. Mandrin selon l'une des revendications 5 à 11, caractérisé en ce qu'une goupille (48) est vissée axialement dans l'organe porte-outil (5), à partir de l'extrémité de l'organe, qui est opposée à l'extrémité d'introduction (41) de la queue de l'outil, de façon que le bout interne de la goupille (48) forme une butée réglable en position axiale pour une queue d'outil.

## Claims

1. Chuck for clamping a tool in particular for machines with automatic feed, of the type comprising a tool-carrying member (5) advantageously in the shape of a tubular sleeve, a flange quill (4) which may be made fast to the tool-carrying member (5), a device (1) susceptible of being rotated by the machine and of rotating the said flange quill (4) through the medium of coupling elements such as bodies of revolution advantageously in the shape of balls (28) partially engaging recesses (29) formed in the surface (21) of the flange (22) of the quill (4) located in front of the said device (1) under the axial thrust force of biasing return elements (31) such as springs accommodated in the said device (1), characterized in that the drive device (1) comprises two coaxial parts (2, 3) which are mounted in mutually fast relationship for joint rotation and are axially movable with respect to each other when the axial force between the tool and the drive member of the machine exceeds a predetermined threshold value.

2. Chuck according to claim 1, characterized in that the device (1) for driving the flange quill (4) comprises a portion (3) to be coupled for joint rotation to the flange quill (4) and a member (2) driven by the machine and advantageously in the shape of a shaft which is mounted in the coupling portion to be axially movable against biasing return means (16) such as a spring determining the aforesaid predetermined threshold value.

3. Chuck according to claim 2, characterized in that the coupling portion (3) and the member (2) driven by the machine are mounted with the assistance of bodies of revolution such as balls (10) for being axially movable against the biasing return means (16), these bodies of revolution (10) being accommodated in axial confronting grooves (8, 9) formed in the coupling portion (3) and the member (2) and also advantageously forming the means for connecting the coupling portion (3) and the member (2) in fast relationship for joint rotation.

4. Chuck according to one of claims 2 or 3, characterized in that the tubular member forming the coupling portion and the member (2) shaped as a shaft are susceptible of being made axially fast to each other with the assistance of a stop screw (26) extending through the said body for engaging a recess provided in the said member (2) within one portion where both parts (2, 3) are concentric.

5. Chuck according to one of claims 1 to 4, characterized in that the tool-carrying member (5) is made in the shape of a tubular sleeve split at (42) in its axial direction advantageously in cross-shaped relationship over the greatest portion of its length from its end (41) for the insertion of the shank of the tool and exhibiting two radially external, frusto-conical, axially shifted portions of convergent conicity, one portion (44) engaging a coaxial frusto-conical bore (46) of the flange quill (4) and the other one (43) co-operating with a frusto-conical portion (45) provided in a coaxial tubular member (6) forming a nut susceptible of being screwed onto a coaxial threaded portion of the said flange quill (4) so that an axial tightening motion of the said nut (6) results in the clamping of the shank of the tool within the tool-carrying member (5) at the level of both frusto-conical portions (43, 44) of the latter.

6. Chuck according to one of the foregoing claims, characterized in that it comprises a ring (34) for the adjustment of the biassing return force exerted upon the balls (28) making the drive device (1) and the flange quill (4) fast to each other, through stepwise rotation, the ring being lockable in each angular position stopping this stepwise movement.

7. Chuck according to claim 6, characterized in that the means for locking the aforesaid ring (34) are formed of bodies of revolution such as balls (37) angularly distributed in equidistant manner at the periphery of the tubular body (3) within recesses (39) provided in the latter and partially engaging seatings (36) formed in front of the seatings (39) in the radially inner face of the said ring (34) under the thrust force of the biassing return member (38) disposed in the bottom of the said recesses (39).

8. Chuck according to one of the foregoing claims, characterized in that it comprises a ring (58) rotatably mounted concentrically on the periphery of the aforesaid coupling portion (3) and means (60, 66, 68) operated by the rotation of this ring (58) and which are susceptible of making the said coupling portion (3) and the said flange quill (4) fast to each other for joint rotation so as to permit the mounting and the removal of a tool in the tool-carrying member (5) through manual actuation of the said ring (58) and of the aforesaid tightening nut (6).

9. Chuck according to claim 8, characterized in that the aforesaid connecting means for joint rotation are disposed within a channel (62, 63, 64) formed in the hollow body (3) and extending between a notch (65) formed in that face (21) of the flange (22) of the quill (4) which is in front of the hollow body (3) at an eccentric place and a notch (59) formed in the radially inner face of the ring (58), the fast connecting means comprising in associated relation to a channel (62) balls (60, 66) placed in the ends of the said channel and susceptible of engaging the notches (65 and 59), respectively, between these two balls (60 and 66) being interposed means (68) so that a displacement of one ball (60) inwards of the channel (62) under the effect of the rotation of the ring (58) in either direction results in the forced engagement of the ball (66) with its notch (65).

10. Chuck according to one of claims 8 or 9, characterized in that it comprises means for bringing the aforesaid ring (58) back to the neutral uncoupling position under the effect of elastic means such as a spring (71).

11. Chuck according to claim 10, characterized in that a second channel (62) is formed in the hollow body (3), which extends between a second notch (65) formed in the face (21) of the flange (22) of the quill (4) and a second notch (59) formed in the radially inner face of the ring (58), balls (60, 66) are accommodated in the ends located in front of the notches (65 and 59), respectively, between which is disposed an elastically compressible means (70) such as a spring means (71).

12. Chuck according to one of claims 5 to 11, characterized in that a stud (48) is axially screwed into the tool-carrying member (5) from that end of the member which is opposite to the end (4) for the insertion of the shank of the tool, so that the inner tip of the stud (48) forms a stop adjustable in axial position for a tool shank.

**Patentansprüche**

1. Spannfutter für ein Werkzeug, insbesondere für Maschinen mit automatischem Vorschub, mit einem Werkzeugträgerorgan (5) vorteilhafterweise in Form einer rohrförmigen Muffe, einer Tellermuffe (4), die fest mit dem Werkzeugträger (5) verbunden werden kann, einer Vorrichtung (1), die durch die Maschine in Drehung versetzt werden kann und die genannte Tellermuffe (4) zur Drehung mit Hilfe von Kupplungselementen antreibt, wie Drehkörpern, vorteilhafterweise in Form von Kugeln (28), die teilweise in Ausnehmungen (29) in der Fläche (21) des Tellers (22) der Muffe (4) gegenüber der genannten Vorrichtung (1) unter der Wirkung der axialen Schubkraft von Rückstellelementen (31), wie in der Vorrichtung (1) gelagerten Federn, eingreifen, **dadurch gekennzeichnet,** daß die Antriebsvorrichtung (1) zwei koaxiale Teile (2, 3) besitzt, die miteinander drehfest verbunden sind und zueinander axial bewegbar sind, wenn die axiale Kraft zwischen dem Werkzeug und dem Antriebsorgan der Maschine einen vorbestimmten Schwellenwert überschreitet.

2. Futter nach Anspruch 1, **dadurch gekennzeichnet,** daß die Antriebsvorrichtung (1) der Tellermuffe (4) einen Teil (3) zur Drehkupplung der Tellermuffe (4) und eines von der Maschine angetriebenen Organs (2) vorteilhafterweise in Form einer Achse besitzt, die axial beweglich in dem Kupplungsteil entegegen der Wirkung von Rückstellmitteln (16) wie eine Feder, die den vorgenannten vorgegebenen Stellenwert bestimmen, angebracht ist.

3. Futter nach Anspruch 2, **dadurch gekennzeichnet,** daß der Kupplungsteil (3) und das Organ (2), die von der Maschine angetrieben werden, über Drehkörper wie Kugeln (10) entgegen der Wirkung von Rückstellmitteln (16) axial beweglich sind, wobei diese Drehkörper (10) in gegenüberliegenden axialen Nuten (8, 9) in dem Ankupplungsteil (3) und dem Organ (2) gelagert sind und vorteilhafterweise ebenfalls die Mittel zur festen Drehverbindung zwischen dem Kupplungsteil (3) und dem Organ (2) bilden.

4. Futter nach einem der Ansprüche 2 oder 3, **dadurch gekennzeichnet,** daß der rohrförmige Körper, der den Kupplungsteil bildet, und das Organ (2) in Form einer Achse axial miteinander fest verbunden werden können, mit Hilfe einer Feststellschraube (26), die den genannten Körper durchdringt, um in eine Ausnehmung in dem Organ (2) in einem Bereich einzugreifen, wo die zwei Stücke (2, 3) konzentrisch sind.

5. Futter nach einem der Ansprüche 1 bis 4, **dadurch gekennzeichnet, daß** das Werkzeugträgerorgan (5) als rohrförmige Muffe ausgebildet ist, die in (42) in axialer Richtung, vorzugsweise kreuzförmig, auf dem größten Teil seiner Länge, von seinem Ende (41) zur Einführung des Stiels des Werkzeugs ausgeschlitzt ist, und zwei radial aussen gelegene kegelstumpfförmige Bereiche (43, 44) besitzt, die axial versetzt sind und eine konvergierende Konizität aufweisen, einen Bereich (44), der in eine koaxiale kegelstumpfförmige Bohrung (46) in der Tellermuffe (4) eingreift, und einen anderen Bereich (43), der mit einem kegelstumpfförmigen Bereich in einem koaxialen rohrförmigen Organ (6) zusammenwirkt, das eine Mutter bildet, die auf einen koaxialen Gewindeteil der Tellermuffe (4) geschraubt werden kann, sodaß eine axiale Spannbewegung der Mutter (6) das Festspannen des Stiels des Werkzeugs in dem Werkzeugträgerorgan (5) in Höhe der zwei kegelstumpfförmigen Bereiche (43, 44) dieses Organs bewirkt.

6. Futter nach einem der vorangehenden Ansprüche, **dadurch gekennzeichnet,daß** es einen Ring (34) zur Einstellung der Rückstellkraft, die auf die Kugel (28) zur festen Verbindung der Anstriebsvorrichtung (1) und der Tellermuffe (4) einwirkt, durch schrittweise Drehung besitzt, wobei der Ring in jeder Arretierwinkelstellung dieser schrittweisen Bewegung verriegelbar ist.

7. Futter nach Anspruch 6, **dadurch gekennzeichnet, daß** die Verriegelungsmittel des Rings (34) von Drehkörpern wie Kugeln (37) gebildet werden, die winkelmäßig in gleichen Abständen am Umfang des rohrförmigen Körpers (3) in Lagerungen (39) verteilt sind, die in diesem vorgesehen sind, und teilweise in Ausnehmungen (36) gegenüber den Lagerungen (39) in der radial innen gelegenen Fläche des genannten Ringes (34) unter der Wirkung der Druckkraft von im Boden der genannten Lagerungen (39) vorgesehenen Rückstellorgane (38) eingreifen.

8. Muffe nach einem der vorangehenden Ansprüche, **dadurch gekennzeichnet, daß** sie einen Ring (58), der konzentrisch und drehbar am Umfang des genannten Kupplungsteils (3) angeordnet ist, und durch die Drehung dieses Rings (58) gesteuerte Mittel (60, 66, 68) besitzt, die den genannten Kupplungsteil (3) und die genannte Tellermuffe (4) drehfest miteinander verbinden können, sodaß der Einbau und der Ausbau eines Werkzeugs in oder aus dem Werkzeugträgerorgan (5) durch Betätigung von Hand des Rings (58) und der Spannmutter (6) bewirkt werden können.

9. Futter nach Anspruch (8), **dadurch gekennzeichnet, daß** die genannten Mittel zur festen Drehverbindung in einem Kanal (62, 63, 64) angeordnet sind, der in dem Hohlkörper (3) ausgeführt ist und sich zwischen einer Ausnehmung (65) in der Oberfläche (21) des Tellers (22) der Muffe (4) gegenüber dem Hohlkörper (3) an einem exzentrischen Ort und einer Ausnehmung (59) in der radial innen liegenden Fläche des Rings (58) erstreckt, wobei die Mittel zur festen Verbindung einem Kanal (62) zugeordnete Kugeln (60,66) besitzen,die in den Enden des Kanals angeordnet sind und sich jeweils in die Ausnehmungen (65 und 59) setzen können, wobei zwischen diesen zwei Kugeln (60 und 66) Mittel (68) eingesetzt sind, sodaß eine Bewegung einer Kugel (60) in das Innere des Kanals (62) hinein unter der Wirkung der Drehung des Rings (58) in die oder andere Richtung das erzwungene Eingreifen der Kugel (66) in ihre Ausnehmung (65) bewirkt.

10. Futter nach einem der Ansprüche 8 oder 9, **dadurch gekennzeichnet, daß** es Mittel zur Rückstellung des genannten Rings (58) in seine neutrale Freigabestellung unter der Wirkung elastischer Mittel wie einer Feder (71) besitzt.

11. Futter nach Anspruch 10, **dadurch gekennzeichnet, daß** ein zweiter Kanal (62) in dem Hohlkörper (3) vorgesehen ist, der sich zwischen einer zweiten Ausnehmung (65) in der Fläche (21) des Tellers (22) der Muffe (4) und einer zweiten Ausnehmung (59) in der radial innen gelegenen Fläche des Rings (58) erstreckt, daß Kugeln (60, 66) in den jeweiligen Enden gegenüber den Ausnehmungen (65 und 59) angeordnet sind, zwischen denen ein elastisch zusammen drückbares Mittel (70) wie ein Federmittel (71) eingesetzt ist.

12. Futter nach einem der Ansprüche 5 bis 11, **dadurch gekennzeichnet, daß** ein Stift (48) axial in das Werkzeugträgerorgan (5) von dem Ende des Organs aus eingeschraubt ist, das dem Einführungsende (41) des Stiels des Werkzeugs entegegengesetzt ist, sodaß das innere Ende des Stifts (48) einen in seiner axialen Stellung einstellbaren Anschlag für einen Werkzeugstiel bildet.

_Fig. 1_

Fig 3

Fig 7

Fig 2

_Fig.5_

_Fig.4_

_Fig.6_